# FASCICULE DE BREVET EUROPEEN

(11) **EP 0 735 094 B1**
(45) Date de publication et mention de la délivrance du brevet: **11.12.2002**
(21) Numéro de dépôt: 96400547.4
(22) Date de dépôt: 15.03.1996
(51) Int. Cl.: C08L 27/06, C08L 33/12

(54) **Procédé pour améliorer la tenue à la chaleur des PVC**
Verfahren zur Verbesserung der Wärmebeständigkeit des PVC
Process for improving the heat resistance of PVC

(30) Priorité: 22.03.1995 FR 9503327
(43) Date de publication de la demande: 02.10.1996
(73) Titulaire: CECA S.A., 92800 Puteaux (FR)
(72) Inventeur: Vuillemin, Bruno, F-64000 Pau (FR); Callin, Daniel, F-64000 Pau (FR)
(74) Mandataire: Treuil, Claude

(56) Documents cités:
- EP-A- 0 614 942
- DE-B- 1 260 777
- US-A- 5 100 946
- MACROMOLECULES, vol. 23, no. 4, 1990, pages 1202-1207, XP002007103 F. C. DE SCHREYVER: "Evaluation of nonradiative energy transfer as a means of probing polymer miscibility and polymer phase separation"
- CHEMICAL ABSTRACTS, vol. 107, no. 16, 19 Octobre 1987 Columbus, Ohio, US; abstract no. 135249, XP002007104 & JP-A-61 014 246 (MITSUBISHI RAYON CO., LTD.) 22 Janvier 1986
- Taschenbuch Kunstoff-Prüftechnik; Roger P. Brown; Carl Hanser Verlag München Wien; 1984; pages 372-374.
- POLYMER SCIENCE DICTIONARY; MARK S. M. ALGER; 1989; page 504
- Fiche de données de sécurité ELF ATOCHEM S.A.; Produit: Lacovyl série S-SK-RB-BB-GB-GS; N° FDS: 01415; Version: 6; Date: 26/03/1998; pages 1/6-6/6.

## Description

La présente invention est relative aux compositions thermoplastiques à base de polychlorure de vinyle.

Le polychlorure de vinyle (PVC) est utilisé dans de nombreuses applications où une bonne tenue à la chaleur est demandée : profilés de menuiserie ou pièces ou coffrets électriques (injectés ou extrudés), plaques transparentes, tubes et raccords, emballages ou récipients subissant des remplissages à chaud (sauces, confitures, par ex). Le PVC en lui-même n'offre qu'une tenue très médiocre à la chaleur, du fait d'une basse température de transition vitreuse qui limite la température de service des objets qui en sont fait à tout au plus 70°C. Pour améliorer sa tenue à la chaleur, on lui incorpore divers additifs compatibles ou non dont le point de ramollissement est sensiblement plus élevé. On peut diviser ces additifs en deux classes selon que les PVC additivés restent ou non transparents.

Parmi les additifs qui conduisent à des matériaux opaques ou translucides, on cite par exemple les copolymères statistiques de méthacrylate de méthyle, d'α-méthylstyrène (α MS) et d'anhydride maléique ou les copolymères MMA / αMS / acrylonitrile. Ces produits ne sont pas miscibles au PVC et du fait de leur solubilité limitée, leur efficacité d'additifs de tenue thermique l'est aussi.

Parmi les additifs pour PVC transparent, on rencontre par exemple des copolymères statistiques de MMA / n-cyclohexyl-maléimide. Ils ne sont cependant pas miscibles en toute proportion avec le PVC, et leur incorporation se traduit par une altération de ses propriétés mécaniques, en particulier de la résistance au choc. Il s'avère qu'il n'est pas possible de bien corriger ce défaut par incorporation des additifs renforçateurs de choc que l'on trouve dans le commerce, ce qui n'a rien pour étonner puisque ces additifs ne sont pas conçus pour cette application. On rencontre aussi des copolymères du type acrylique-imide, en particulier les copolymères MMA / N-méthylglutarimide (Die Angewandte Makromolekulare Chemie 171, N°2831, 1989, p. 175), improprement dénommés PMMA partiellement imidifiés, qui sont de bons additifs de tenue à la chaleur, mais qui induisent une mauvaise stabilité du PVC lors de sa mise en oeuvre ainsi qu'un mauvais vieillissement du PVC. Ce sont aussi des produits coûteux, dont la disponibilité est au surplus incertaine.

DE-B-1.260.777 décrit des compositions, à base de PVC, résistantes au choc contenant du PMMA péparé par polymérisation en dispersion aqueuse (voie radicalaire).

Le problème reste donc pose de compositions thermoplastiques à base de PVC qui aient une bonne tenue à la température, tout en présentant des propriétés mécaniques satisfaisantes, en particulier une bonne résistance au choc, ainsi qu'une stabilité thermique lors de la mise en oeuvre (tenue à l'oxydation thermique) et un vieillissement naturel (surtout sous l'effet des U.V.) qui restent très comparables à ceux du PVC seul. La présente invention apporte une solution non évidente à ce problème avec des formulations comportant du PVC à raison d'au moins 30% en poids, du PMMA syndiotactique à raison d'au moins 1% en poids, et un additif choc à raison de 1 à 30% en poids, étant entendu que la somme de ces trois composants de la formule est de 100%, et qu'à cette composition de base il est possible d'ajouter jusqu'à 20% d'ingrédients ordinaires de formulation, comme des charges.

Au sens de la présente invention, le PVC est un homopolymère de chlorure de vinyle dont la valeur K (Kw selon la norme DIN 53726) est comprise entre 50 et 70 ; le PMMA est un polyméthacrylate de méthyle syndiotactique de masse moléculaire comprise entre 5,000 et 120,000, la teneur en triades syndiotactiques (ou degré de tacticité) telle qu'on la mesure par résonance magnétique nucléaire du proton, y étant supérieure à 70%. Le PMMA syndiotactique peut éventuellement contenir de 1 à 10% d'un autre comonomère méthacrylate ou acrylate. Les additifs chocs qui comportent une phase élastomérique sont bien connus de l'homme du métier ; on en trouvera la description dans l'ouvrage "Encyclopédie du PVC", 3e édition, vol 2, p. 409, L.I. Nass et Ch. A. Heiberger. On cite ici, mais de façon absolument non limitative, le D200, commercialisé par la société CECA S.A. ou la société Elf Atochem N.A. aux USA, qui est un additif choc de structure coeur / écorce dont le coeur élastomérique est majoritairement acrylique, ou le BTA 736 qui est un copolymère élastomère de méthacrylate de méthyle, de butadiène et de styrène. On préférera les additifs chocs présentant une stabilité suffisante au vieillissement, en particulier ceux qui contiennent peu ou pas de butadiène (D 200 de CECA S.A. ou W300 de Metablen® BV). L'invention présente un intérêt tout particulier pour la réalisation de formulations de compositions transparentes de PVC dont on souhaite que les propriétés de transparence soient très peu sensibles aux conditions de mise en oeuvre et aux facteurs de vieillissement.

### EXEMPLES

Dans ces exemples, on a apprécié la résistance à la chaleur par mesure de la température de ramollissement VICAT selon la norme ISO 306. Les températures VICAT proches de 90°C sont particulièrement appréciées. La résistance au choc dans les exemples 1 et 2 est mesurée selon la norme ISO 180 (IZOD entaillé), et dans l'exemple 3 selon la norme BS2782 (charpy). On s'intéresse plus particulièrement aux additifs qui permettent d'atteindre une résistance IZOD de 5 J/cm ou plus.

L'observation des modifications de coloration d'une plaque transparente de PVC permet d'apprécier l'efficacité d'un additif chaleur par mesure d'un seuil apparent de dégradation thermique. C'est la détermination d'une température de cramage (voir exemple 4 ci-dessous).

L'appréciation des propriétés optiques d'un PVC transparent est effectuée par des mesures de trouble (haze) et d'opacité selon la norme CIE n°15-2 (1986). (Voir aussi F.M. Willmouth, dans "Optical Properties of Polymers", Ed. G.H. Meeten, Elsevier Ap. Sc. Pub. 1986, p. 276).

### EXEMPLE 1

On compare un additif chaleur de l'art antérieur à un additif chaleur selon l'invention dans un mélange thermoplastique composé de :

| | |
|---|---|
| PVC | 100 PHR |
| additif chaleur | variable selon l'exemple |
| additif choc | dose uniforme |
| lubrifiant interne | 0,6 PHR |
| lubrifiant externe | 0,2 PHR |
| additif améliorant la processabilité | 2 PHR |

Le PVC est ici un PVC de valeur K = 57, le Lacovyl® S071S d'Elf Atochem. L'additif chaleur selon l'art antérieur est un copolymère MMA / N-méthylglutarimide de masse moléculaire 63.000 et de Tg = 130°C (au catalogue de Rohm & Haas sous la dénomination commerciale HT510) ; l'additif chaleur selon l'invention est un PMMA de masse moléculaire 76.000, comportant 78% de triades syndiotactiques. L'additif choc, dans l'essai utilisé à dose uniforme, est le BTA 736 de Rohm et Haas.

On a relevé les résultats suivants :

| ADDITIF CHALEUR | Choc (IZOD entaillé) (J/cm) | | Vicat (°C) | |
|---|---|---|---|---|
| PHR | PMMA IM | PMMA SYND | PMMA IM | PMMA SYND |
| 5 | 0,47 | 0,41 | 80 | 80 |
| 10 | 0,45 | 0,39 | 82 | 81,5 |
| 20 | 0,48 | 0,42 | 86 | 84 |
| 30 | 0,44 | 0,41 | 89 | 87 |
| 40 | 0,45 | 0,61 | 91 | 89,5 |

On remarque que les températures de ramollissement évoluent de façon très comparables avec chacun des deux additifs chaleur, sans que les résistances au choc varient de façon significative.

### EXEMPLE 2

Dans les résultats présentés ici, c'est le taux de PMMA syndiotactique qui a été maintenu constant (au niveau de 25 PHR) et celui de l'additif choc qui a varié (de 4 à 18 PHR). L'additif chaleur selon l'invention est un PMMA de masse moléculaire 55.000, dont le taux de triades syndiotactiques est de 78% et l'indice de polymolécularité Ip de 2.

| ADDITIF Choc | Choc (IZOD entaillé) | Vicat B |
|---|---|---|
| 4 | 0,4 | 85,5 |
| 6 | 0,5 | 85,5 |
| 8 | 0,6 | 85,5 |
| 10 | 0,6 | 85,5 |
| 12 | 0,7 | 85,5 |
| 14 | 1 | 85,5 |
| 16 | 5 | 85,5 |
| 18 | 8 | 85,5 |

Ces résultats confirment l'excellente compatibilité entre le PMMA syndiotactique et l'additif choc.

### EXEMPLE 3

Cet exemple illustre l'efficacité du PMMA syndiotactique comme additif "chaleur" dans une formulation de PVC rigide et transparent utilisable en extérieur. Cet additif a été ajouté à des teneurs de 10, 20 et 25 PHR dans la formulation de PVC suivante:

| | |
|---|---|
| PVC (Lacovyl® S091) | 100 PHR |
| additif choc (Metablen® W300) | 10 PHR |
| stabilisant à l'étain | 2,8 PHR |
| cire de polyéthylène oxydé | 0,15 PHR |
| lubrifiant interne | 0,8 PHR |
| lubrifiant externe | 0,15 PHR |
| additif améliorant la processabilité | 1,6 PHR |

La plaque transparente est obtenue après malaxage de la composition de PVC sur un malaxeur bicylindrique jusqu'à gélification. On mesure ensuite la tenue à la température de la plaque (VICAT B 50N) et la tenue au choc suivant le test Charpy entaillé (norme BS 2782).

On relève :

| | | VICAT (°C) | Choc Charpy (kJ/m²) |
|---|---|---|---|
| Référence sans additif "chaleur" | | 79 | 9 |
| PMMA syndiotactique | 10 PHR | 83 | 5 |
| Mn = 88.000 | 20 PHR | 86 | 4 |
| Ip = 1,8 | | | |
| % triades | 25 PHR | 88 | 3 |
| syndio = 78 % | | | |

On observe que les températures de ramollissement évoluent de façon significatives et comparables à l'exemple 1, en même temps que le niveau de choc reste acceptable pour l'application plaque transparente utilisable en extérieur, puisque l'additif choc considéré présente une stabilité suffisante au vieillissement extérieur.

### EXEMPLE 4

On compare dans cet exemple la stabilité du PVC en mélange avec l'additif chaleur lors d'une mise en oeuvre.

On place dans un four Werner Mathis à 200°C une plaque transparente obtenue après malaxage d'une composition de PVC sur un malaxeur bicylindrique jusqu'à gélification. Dans le cas de l'exemple, la composition de PVC est la suivante :

| | |
|---|---|
| PVC (Lacovyl® S091 - valeur K = 62) | 100 PHR |
| Metablen® W300 | 10 PHR |
| Stabilisant à l'étain | 2,8 PHR |
| Cire de PE oxydé | 0,15 PHR |
| Lubrifiant interne | 0,8 PHR |
| Lubrifiant externe | 0,15 PHR |
| Additif améliorant la processabilité | 1,6 PHR |

On mesure alors le temps de cramage, temps au bout duquel la plaque de PVC se colore devient brune ou noire.

| Echantillon | Temps de cramage |
|---|---|
| PVC témoin | 51 minutes |
| Mélange PVC/HT510 (25PHR) | 27 minutes |
| Mélange PVC/PMMA syndio (25PHR) | 50 minutes |

On constate que contre toute attente, l'additif selon l'art antérieur introduit dans ces conditions une instabilité marquée, alors que la composition avec l'additif selon l'invention reste pratiquement inaltérée.

### EXEMPLE 5

On compare les propriétés optiques de plaques pressées réalisées dans une même composition PVC transparente. Le trouble et l'opacité sont mesurés à l'aide d'un spectrocolorimètre Hunterlab.

Après exposition dans les mêmes conditions que dans l'exemple 4, on mesure :

| Echantillon | Trouble | Opacité % |
|---|---|---|
| PVC témoin | 15 | 21 |
| PVC/PMMA syndio (25PHR) | 14 | 21 |

On constate que dans les conditions de l'essai, l'additif selon l'invention n'altère pas la transparence du PVC.

## Revendications

1. Compositions thermoplastiques à base de PVC, comportant outre le PVC, un additif de résistance à la chaleur et un additif de résistance au choc, **caractérisées en ce que** :
■ le PVC est un homopolymère de chlorure de vinyle de valeur K (mesurée selon la norme DIN 53726) comprise entre 50 et 70,
■ l'additif de résistance à la chaleur est un PMMA syndiotactique dont le degré de tacticité mesuré par résonance magnétique nucléaire du proton est au moins égal à 70% et de masse moléculaire comprise entre 5.000 et 120.000,
■ le PVC, le PMMA et l'additif de résistance au choc sont présents dans les proportions pondérales suivantes, le PVC à raison d'au moins 30%, le PMMA syndiotactique à raison d'au moins 1%, et l'additif choc à raison de 1 à 30%, la somme PVC + PMMA + additif choc étant égale à 100%.

2. Utilisation des compositions selon la revendication 1 pour la réalisation de compositions transparentes de PVC.

## Claims

1. PVC-based thermoplastic compositions containing, in addition to PVC, an additive for resistance to heat and an additive for resistance to impact, **characterized in that**:
■ the PVC is a vinyl chloride homopolymer with a K value (measured according to Standard DIN 53726) of between 50 and 70,
■ the additive for resistance to heat is a syndiotactic PMMA, the degree of tacticity of which, measured by proton nuclear magnetic resonance, is at least equal to 70%, with a molecular mass of between 5 000 and 120 000,
■ the PVC, the PMMA and the additive for resistance to impact are present in the following proportions by weight: the PVC in a proportion of at least 30%, the syndiotactic PMMA in the proportion of at least 1% and the impact modifier in the proportion of 1 to 30%, the sum PVC + PMMA + impact modifier being equal to 100%.

2. Use of the compositions according to Claim 1 for the production of transparent PVC compositions.

## Patentansprüche

1. Thermoplastische Zusammensetzungen auf PVC-Basis, die neben dem PVC ein Additiv für die thermische Beständigkeit und einen Schlagzähigkeitsverbesserer enthalten, **dadurch gekennzeichnet, daß**
• das PVC ein Homopolymer von Vinylchlorid mit einem K-Wert ist (gemessen nach der DIN-Norm 53726), der im Bereich von 50 bis 70 liegt,
• das Additiv für die thermische Beständigkeit ein syndiotaktisches PMMA ist, dessen Taktizitätsgrad, der durch kernmagnetische Resonanz des Protons gemessen wird, mindestens 70 % beträgt und dessen Molmasse im Bereich von 5000 bis 120000 liegt,
• das PVC, das PMMA und der Schlagzähigkeitsverbesserer in den folgenden gewichtsbezogenen Anteilen enthalten sind: das PVC in einem Anteil von mindestens 30 %, das syndiotaktische PMMA in einem Anteil von mindestens 1 %, der Schlagzähigkeitsverbesserer in einem Anteil von 1 bis 30 %, wobei die Summe aus PVC + PMMA + Schlagzähigkeitsverbesserer 100 % beträgt.

2. Verwendung der Zusammensetzungen nach Anspruch 1 für die Herstellung durchsichtige PVC-Zusammensetzungen.
